# EUROPEAN PATENT APPLICATION

(11) **EP 2 109 197 A1**
(43) Date of publication of application: **14.10.2009**
(21) Application number: 09156972.3
(22) Date of filing: 31.03.2009
(51) Int. Cl.: H01S 3/08, H01S 3/109, H01S 3/102, H01S 3/131

(54) **Laser oscillator and laser processing apparatus**

(30) Priority: 08.04.2008 JP 2008100082
(71) Applicant: Miyachi Corporation, Noda City, Chiba (JP)
(72) Inventor: Kase, Junpei, Chiba (JP); Amano, Satoru, Chiba (JP)
(74) Representative: Makovski, Priscilla Mary

(57) **Abstract**

A laser oscillator (10) of a laser processing apparatus includes a pair of terminating mirrors (12,14), between which a straight light path lies, and also includes a 1/4 wavelength plate (16), an active medium (18), a higher harmonic wave separating/outputting mirror (20), a condensing optical lens (22), and a nonlinear optical crystal (24) (wavelength converting crystal) that are lined up at given intervals on the light path between the terminating mirrors (12,14). The focus (F) of the optical lens (22) is determined to be near a reflection surface (14a) of the first terminating mirror (14), so that the optical lens is disposed to be separated from the reflection surface of the first terminating mirror by a distance approximately equal to a focal distance across the nonlinear optical crystal (24) on the light path of an optical resonator formed by the mirrors (12,14) or in any other suitable way.

## Description

### BACKGROUND OF THE INVENTION

### 1. Field of the Invention

The present invention relates generally to a laser processing apparatus that uses a higher harmonic wave laser beam for laser processing, and, more particularly, to a laser oscillator that generates a higher harmonic wave laser beam from a fundamental wave laser beam in an optical resonator and to a laser processing apparatus having the laser oscillator.

### 2. Description of the Related Art

Processing using higher harmonic wave laser having a frequency N times (N denotes an integer equal to or more than 2) the frequency of a YAG fundamental wave has been garnering attention in these days. For example, visible light laser (green laser) of a second higher harmonic wave having a wavelength half (532 nm) of that of the YAG fundamental wave (1064 nm) has come into wide use for processing metals, such as copper and gold. A YAG second higher harmonic wave laser beam shows a fine absorption rate to copper and gold, thus capable of processing a copper-based or gold-based workpiece at an absorption rate 4.5 to 20 times the absorption rate of a fundamental wave laser beam.

The applicant has disclosed a laser welding apparatus of Japanese Patent Application Laid-Open Publication No. 2005-209965. According to the laser welding apparatus, an active medium and a nonlinear optical crystal (KTP crystal) are lined up on a light path in an optical resonator, and the active medium is optically pumped to generate a fundamental wave laser beam, which is incident on (i.e., optically coupled to) the nonlinear optical crystal to generate a laser beam. This laser welding apparatus has a feedback control mechanism that matches the output of a second higher harmonic wave laser beam to a reference value or a reference waveform. Even if units in the optical resonator slightly deteriorate for a time-dependent reason or shift in optical alignment, therefore, the feedback control mechanism works to enable emission of the second higher harmonic wave laser beam with the expected laser power onto a workpiece.

The applicant has also disclosed a higher harmonic wave laser apparatus of Japanese Patent Application Laid-Open Publication No. 2004-214674. According to the higher harmonic wave laser apparatus, an optical resonator incorporates therein an optical lens that condenses and emits a fundamental wave laser beam onto one facet of a nonlinear optical crystal. This higher harmonic wave laser apparatus compensates the divergence of a laser beam to increase the efficiency of conversion from the fundamental wave to the second higher harmonic wave.

A conventional laser processing apparatus adopting the techniques disclosed in the above documents contributes greatly to the expansion/development of laser processing applications of processing copper, gold, etc., using green laser. Still, a problem remains in terms of laser output. Particularly, oscillation efficiency drops when single oscillation is carried out with low input power, which leads to a demand for higher laser output in the field of precision welding, etc.

A YAG rod serving as an active medium thermally expands while being optically excited (during laser oscillation), thus comes to act as a convex lens as a result of so-called thermal lens effect. This destabilizes the output of a fundamental wave laser beam, and consequently destabilizes the output of a second higher harmonic wave laser beam. This kind of laser output fluctuation is difficult to compensate even with the power feedback control mechanism because increasing laser output to compensate a decrease in laser output intensifies the influence of the thermal lens effect.

### SUMMARY OF THE INVENTION

The present invention was conceived to solve the above problems of conventional techniques, and it is therefore the object of the present invention to provide a laser oscillator and a laser processing apparatus that achieve a further improvement in laser oscillation efficiency and higher output of a higher harmonic wave laser beam to enhance processing capability.

In order to achieve the above object, a laser oscillator of the present invention includes an optical resonator having first and second terminating mirrors that are optically arranged opposite to each other, an active medium disposed on a light path of the optical resonator, an excitation unit that pumps the active medium to generate a fundamental wave laser beam having a fundamental frequency, a nonlinear optical crystal that is cut for type II phase matching and that is disposed closer to the first terminating mirror on the light path of the optical resonator to generate a higher harmonic wave laser beam having a frequency N times (N denotes an integer equal to or more than 2) the frequency of the fundamental wave laser beam, an optical lens that is disposed to be separated from the first terminating mirror by a distant approximately equal to a focal distance across the nonlinear optical crystal on the light path of the optical resonator so that the focus of the optical lens is located near a reflection surface of the first terminating mirror, a 1/4 wavelength plate disposed between the active medium and the second terminating mirror on the light path of the optical resonator, and a higher harmonic wave separating/outputting mirror that is disposed on the light path of the optical resonator to extract the higher harmonic wave laser beam out of the optical resonator.

In the present invention, a higher harmonic wave laser beam is equivalent to, for example, a laser beam having the frequency of a second higher harmonic wave (with wavelength of 532 nm), the frequency of a third higher harmonic wave (with wavelength of 266 nm), or a frequency higher than those frequencies.

In the above configuration, the 1/4 wavelength plate is disposed in the optical resonator. This stabilizes a power ratio between ordinary light and extraordinary light to the nonlinear optical crystal cut for type II phase matching. The focus of the optical lens is determined to be near the reflection surface of the first terminating mirror, and the optical lens is disposed to be separated from the reflection surface of the first terminating mirror by the distant approximately equal to the focal distance across the nonlinear optical crystal. This optically couples the nonlinear optical crystal to a fundamental mode of the optical resonator while prevents the scattering loss of a light beam of a fundamental wavelength at the refection surface of the first terminating mirror, thus sufficiently confines the light beam of the fundamental wavelength in the optical resonator to improve the amplification factor of the fundamental wave and consequently improve laser conversion efficiency. In this manner, disposing the 1/4 wavelength plate in the optical resonator and determining the focus of the optical lens to be near the refection surface of the first terminating mirror to strengthen the optical coupling between the fundamental mode and the nonlinear optical crystal bring about a synergistic effect, which enables the generation of a higher harmonic wave laser beam of output power far greater than a conventional higher harmonic wave laser beam.

According to a preferred aspect of the present invention, the optical lens condenses a fundamental wave laser beam propagated from the active medium virtually as parallel light and causes the condensing fundamental wave laser beam to pass through the nonlinear optical crystal to focus on the focus. The optical lens then collimates the fundamental wave laser beam reflected by the first terminating mirror as radiantly spreading light and propagating through the nonlinear optical crystal to the optical lens, into parallel light.

According to a preferred aspect of the present invention, the focus of the optical lens is determined to be at a position separated from the reflection surface of the first terminating mirror toward the optical lens by a distance of 5 mm or less (more preferably, about 2 mm). In this manner, shifting the position of focus of the optical lens properly from the reflection surface of the first terminating mirror toward the optical lens surely prevents an undesired phenomenon that the energy of fundamental wave laser beam burns out the optical lens.

According to another preferred aspect of the present invention, the higher harmonic wave separating/outputting mirror is disposed between the active medium and the optical lens in such a way that the separating/outputting mirror tilts at a given angle against the light path of the optical resonator. The optical resonator of the present invention has a linear arrangement configuration in which the higher harmonic wave separating/outputting mirror and both terminating mirrors are arranged on a straight line, and may also have a triangular arrangement configuration in which those three mirrors are arranged at three vertexes of a triangle, respectively. The higher harmonic wave separating/outputting mirror in the linear arrangement configuration is HR (highly reflective) to a higher harmonic wave, and is AR (antireflective: transmittable) to the fundamental wave.

The laser processing apparatus of the present invention includes the laser oscillator of the present invention, and a laser emitting unit that condenses and emits the higher harmonic wave laser beam extracted from the higher harmonic wave separating/outputting mirror of the laser oscillator, onto a workpiece.

Having the laser oscillator of the present invention, the laser processing apparatus of the present invention greatly improves a capability of laser processing using a higher harmonic wave laser beam of high output power.

According to a preferred aspect of the present invention, the laser processing apparatus further includes a reflecting mirror that bends the light path of the higher harmonic wave laser beam extracted from the higher harmonic wave separating/outputting mirror at a given angle, an optical fiber that transmits the higher harmonic wave laser beam from the reflecting mirror to the laser emitting unit, an incident unit that is disposed between the reflecting mirror and the optical fiber and that focuses and emits the higher harmonic wave laser beam from the reflecting mirror onto an incident facet of the optical fiber, and a reflection angle adjusting mechanism that adjusts the direction of reflection of the higher harmonic wave laser beam at the reflecting mirror.

According to another preferred aspect of the present invention, the excitation unit has an excitation light generating unit that generates excitation light for optically pumping the active medium, a laser power supply unit that supplies power for generating excitation light to the excitation light generating unit, and a control unit that controls power supplied from the laser power supply unit to the excitation light generating unit. When pulse laser is output by oscillation, the laser power supply unit may have a dc power supply unit that outputs dc power and a switching element connected between the dc power supply unit and the excitation light generating unit, and causes the switching element to switch on and off at a high frequency during a pulse period to supply power in a pulse waveform to the excitation light generating unit.

The laser processing apparatus may include a power feedback control mechanism that has a higher harmonic wave laser output measuring unit that measures the laser output of a higher harmonic wave laser beam, and a control unit that controls switching of the switching element to match a laser output measurement to a reference value or a reference waveform. In this case, as described above, the 1/4 wavelength plate works to stabilize a phase difference between natural polarization waves (S wave and P wave) resulting from a beam of the fundamental wavelength and a power ratio between ordinary light and extraordinary light. This allows linear power feedback control, thus enables more stable and exact matching of the output of the higher harmonic wave laser beam to the reference value or the reference waveform.

According to the laser oscillator of the present invention, the above configurations and operations achieve a further improvement in laser oscillation efficiency and higher output of a higher harmonic wave laser beam. According to the laser processing apparatus of the present invention, the above configurations and operations improve the processing capability of a higher harmonic wave laser beam.

### BRIEF DESCRIPTION OF THE DRAWINGS

Fig. 1 is a configuration diagram of a laser processing apparatus according to an embodiment of the present invention;
Fig. 2 is a diagram of a configuration and operation of an optical lens in an optical resonator of the embodiment;
Fig. 3 is a diagram of a configuration and operation of the optical lens in the optical resonator in a comparative example;
Fig. 4 is a diagram of a time/laser power characteristic shown by the laser processing apparatus of the embodiment;
Fig. 5 is a diagram of an excitation current/oscillation efficiency characteristic shown by the laser processing apparatus of the embodiment; and
Fig. 6 is a configuration diagram of a laser processing apparatus according to another embodiment of the present invention.

### DESCRIPTION OF THE PREFERRED EMBODIMENT

A preferred embodiment of the present invention will now be described with reference to the accompanying drawings.

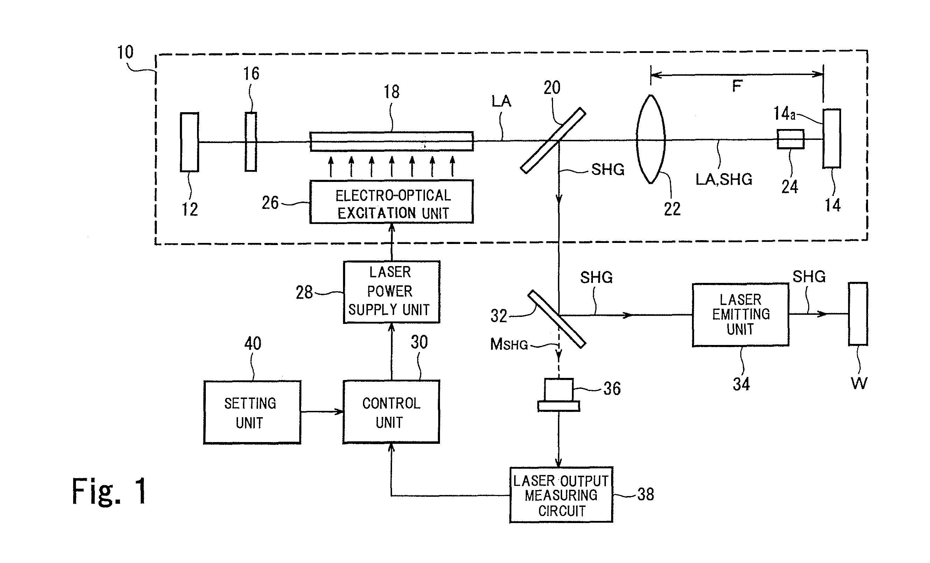

Fig. 1 depicts a configuration of a laser processing apparatus according to an embodiment of the present invention. This laser processing apparatus is configured as a green laser processor that performs desired laser processing (e.g., laser welding) on a workpiece W mainly made of copper or gold, using a green laser beam (second higher harmonic wave of 532 nm in wavelength) in the form of a long pulse (with a pulse width of 10 µs or higher, typically 1 to 3 ms).

A laser oscillator 10 of the laser processing apparatus includes a pair of terminating mirrors 12 and 14, between which a straight light path lies, and also includes a 1/4 wavelength plate 16, an active medium 18, a higher harmonic wave separating/outputting mirror 20, a condensing lens 22, and a nonlinear optical crystal (wavelength converting crystal) 24 that are lined up from the left to right of Fig. 1 at given intervals on the light path between the terminating mirrors 12 and 14. In another configuration, a reflecting mirror may be disposed between the 1/4 wavelength plate and the active medium to bend the light path in an optical resonator.

The terminating mirrors 12 and 14 face each other to make up the optical resonator. A reflection surface 12a of the second terminating mirror 12 on the left of Fig. 1 is coated with a film reflective to a fundamental wavelength (1064 nm). A reflection surface 14a of the first terminating mirror 14 on the right of Fig. 1 is coated with a film reflective to the fundamental wavelength (1064 nm) and with a film reflective to the second higher harmonic wave (532 nm).

Each of the reflection surfaces 12a and 14a of both terminating mirrors 12 and 14 is formed into a concave surface having a proper radius of curvature. For example, the reflection surface 14a of the first terminating mirror 14 has a radius of curvature of about 9000 mm, and the reflection surface 12a of the second terminating mirror 12 has a radius of curvature of about 5000 mm.

The active medium 18 is made of, for example, an Nd-YAG rod, is disposed closer to the second terminating mirror 12, and is optically pumped by an electro-optical excitation unit 26. The electro-optical excitation unit 26 has an excitation light source (e.g., excitation lamp or laser diode) that generates excitation light emitted onto the YAG rod 18. The excitation light source is turned on and driven by excitation current from a laser power supply unit 28 to pump the active medium 18 continuously or intermittently. The laser power supply unit 28 turns on and drives the electro-optical excitation unit 26 under control by a control unit 30. Hence a beam LA of the fundamental wavelength (1064 nm) generated at the active medium 18 is confined and amplified between both terminating mirrors 12 and 14.

The 1/4 wavelength plate 16 disposed between the second terminating mirror 12 and the active medium 18 is made of a birefringent crystal element. The 1/4 wavelength plate 16 creates a given phase difference between two natural polarization waves (S wave and P wave) when the fundamental wave laser beam LA passes through the birefringent crystal, thus operates to keep a power ratio between ordinary light and extraordinary light constant relative to the nonlinear optical crystal 24.

The nonlinear optical crystal 24 is made of, for example, a KTP (KTiOPO₄) crystal or LBO (LiB₃O₅) crystal, etc., that is cut for type II phase matching. The nonlinear optical crystal 24 is disposed closer to the first terminating mirror 14, is optically coupled to a fundamental mode resulting from excitation by the optical resonator, and generates a beam SHG of the second higher harmonic wave (532 nm) on the light path of the optical resonator as a result of a nonlinear optical action between the nonlinear optical crystal 24 and the fundamental wavelength.

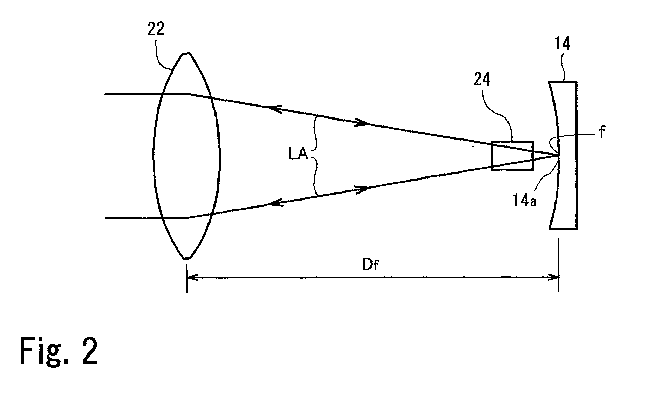

The optical lens 22 is provided to increase the power density of the fundamental wavelength beam LA incident on the nonlinear optical crystal 24. The optical lens 22 is a flat convex lens whose both surfaces are each coated with a dielectric film highly transmittable to both fundamental wavelength and second higher harmonic wave. As shown in Fig. 2, the focus f of the optical lens 22 is determined to be near the reflection surface 14a of the first terminating mirror 14 (preferably, at a position shifted from the reflection surface 14a toward the optical lens 22 by a given or less distance, which will be described later), so that the optical lens 22 is disposed to be separated from the reflection surface 14a of the first terminating mirror 14 by a distant approximately equal to a focal distance D_{f} across the nonlinear optical crystal 24 on the light path of the optical resonator.

The fundamental wavelength beam LA propagating from the first terminating mirror 12 or the active medium 18 toward the right of Fig. 1 passes through the optical lens 22, and then further travels through the nonlinear optical crystal 24 while converging (to optically couple the nonlinear optical crystal 24 to the fundamental mode), and finally focuses on the location of the focus f, that is, near the reflection surface 14a of the first terminating mirror 14, as shown in Fig. 2. The fundamental wavelength beam LA is then reflected by the reflection surface 14a of the first terminating mirror 14, and passes through the nonlinear optical crystal 24 while spreading radiantly (to optically couple the nonlinear optical crystal 24 to the fundamental mode), and then reaches the condensing lens 22, which collimates the fundamental wave beam LA into parallel light to send it back to the active medium 18.

Referring to Fig. 1, the second higher harmonic wave beam SHG coming out of the nonlinear optical crystal 24 toward the right side of Fig. 1 is reflected by the reflection surface 14a of the first terminating mirror 14 to turn back in the opposite direction (leftward on Fig. 1), and passes through the nonlinear optical crystal 24. The second higher harmonic wave beam SHG coming out of the wavelength converting crystal 24 toward the left side of Fig. 1 then falls onto the higher harmonic wave separating/outputting mirror 20 that is disposed to be tilt at a given angle (e.g., 45 degrees) against the light path or light axis of the optical resonator.

The higher harmonic wave separating/outputting mirror 20 is made of a glass board, and has a main surface 20a coated with a film transmittable to the fundamental wavelength and with a film reflective to the second higher harmonic wave. Because of this, the fundamental wavelength beam LA passes through the higher harmonic wave separating/outputting mirror 20 in both left and right directions in the optical resonator. Meanwhile, the second higher harmonic wave beam SHG coming from the nonlinear optical crystal 24 falls onto the higher harmonic wave separating/outputting mirror 20, where the second higher harmonic wave beam SHG is reflected in a given direction (downward on Fig. 1) to be separated from the light path of the optical resonator as an output beam. The second higher harmonic wave beam SHG extracted out of the optical resonator by the higher harmonic wave separating/outputting mirror 20 is then sent to a laser emitting unit 34 via a laser transmission system, such as a bent mirror (reflecting mirror) 32, and is condensed and emitted from the laser emitting unit 34 onto a workpiece W. The laser transmission system may have an arbitrary configuration, thus may be provided as, for example, an optical fiber transmission system.

In a preferred aspect of the present invention, this optical fiber transmission system may include the reflecting mirror 32 that bends the light path of the second higher harmonic wave beam SHG extracted from the higher harmonic wave separating/outputting mirror 20 at a given reflection angle, an optical fiber (not shown) that transmits the second higher harmonic wave laser beam SHG from the reflecting mirror 32 to the laser emitting unit, an incident unit (not shown) that is disposed between the reflecting mirror 32 and the transmission optical fiber and that focuses and emits the second higher harmonic wave laser beam SHG from the reflecting mirror 32 onto an incident facet of the transmission optical fiber, and a reflection angle adjusting mechanism (not shown) that adjusts the direction of reflection of the second higher harmonic wave laser beam SHG at the reflecting mirror 32.

For enabling multipoint simultaneous processing or multiposition processing, the optical fiber transmission system may be provided as a laser multibranch system (not shown) that includes a beam splitter, a plurality of incident units, a plurality of transmission optical fibers, and a plurality of laser emitting units.

To carry out power feedback control over the second higher harmonic wave beam SHG, the laser processing apparatus has a photosensor 36 serving as a photoelectric conversion element that receives leakage light MSHG that is the YAG second higher harmonic wave pulse laser beam SHG leaking from the back of the bent mirror 32. A laser output measuring circuit 38 generates an electric signal (laser output measurement signal) indicative of the laser output measurement of the second higher harmonic wave pulse laser beam SHG, based on an output signal from the photosensor 36. The control unit 30 compares a laser output measurement signal from the laser output measuring circuit 38 with a reference value or a reference waveform from a setting unit 40, and generates, for example, a control signal subjected to pulse width modulation (PWM) according to a comparison error. The laser power supply unit 28 causes a switching element to switch on and off in response to a control signal from the control unit 30 to control the pulse width and the current value of an excitation current supplied to the electro-optical excitation unit 26.

The main feature of the laser processing apparatus is the configuration of the laser oscillator 10 such that the 1/4 wavelength plate 16 is disposed in the optical resonator, and that the focus f of the optical lens 22 for enhancing a degree of optical coupling of the nonlinear optical crystal 24 to the fundamental mode of the optical resonator is determined to be near the reflection surface 14a of the first terminating mirror 14.

As described above, disposing the 1/4 wavelength plate 16 in the optical resonator stabilizes the power ratio between ordinary light and extraordinary light to the nonlinear optical crystal 24. This enables linear power feedback control, thus enabling more stable and exact matching of the output of the second higher harmonic wave beam SHG to the reference value or the reference waveform.

The focus f of the optical lens 22 is determined to be near the reflection surface 14a of the first terminating mirror 14, so that the optical lens 22 is disposed to be separated from the reflection surface 14a of the first terminating mirror 14 by the distant approximately equal to the focal distance D_{f} across the nonlinear optical crystal 24. This optically couples the nonlinear optical crystal 24 to the fundamental mode of the optical resonator and, at the same time, prevents the scattering loss of the fundamental wavelength beam LA at the reflection surface 14a of the first terminating mirror 14, thus sufficiently confines the fundamental wavelength beam LA in the optical resonator to improve the amplification factor and consequently improve the conversion efficiency.

It is preferable that the focus f of the optical lens 22 be determined to be at a position separated from the reflection surface 14a of the first terminating mirror 14 toward the optical lens 22 by a distance of 5 mm or less (more preferably, about 2 mm). In this manner, properly shifting the position of focus f of the optical lens 22 from the reflection surface 14a of the first terminating mirror 14 toward the optical lens 22 surely prevents an undesired phenomenon that the energy of the fundamental wave laser beam LA burns out the optical lens 22.

In such an optical resonator as described above, the focus f of the optical lens 22 usually tends to move toward the optical lens 22 as time goes by. Because of this, if the focus f of the optical lens 22 is shifted to the far side of the reflection surface 14a of the first terminating mirror 14, the reflection surface 14a may be burned out when the focus f moves to the position of the reflection surface 14a as a result of a time-dependent change.

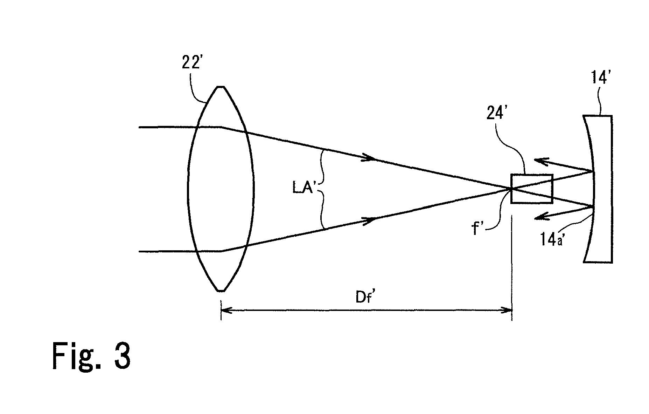

In a referential example according to the conventional technique, as shown in Fig. 3, the focus f' of an optical lens 22' is determined to be near a counter face (left facet on Fig. 3) of a nonlinear optical crystal 24', which means that the optical lens 22' is located at a position separated from the counter face of the nonlinear optical crystal 24' by a distance equal to a focal distance D_{f}'. In this configuration, a beam LA' of a fundamental wavelength propagating from an active medium (not shown) toward the right side of Fig. 3 passes through the optical lens 22', and then focuses onto the focus f' near the counter face of the nonlinear optical crystal 24'. After traveling through the focus f', the fundamental wavelength beam LA' propagates rightward while spreading radiantly to fall onto a reflection surface 14a' of a first terminating mirror 14' as a beam spot of a fairly wide area. At this time, part of return light having fallen onto the reflection surface 14a' and been reflected thereon has an incident angle or a reflection angle exceeding a prescribed value, and such return light widely deflects radiantly outward from the light path of the optical resonator, thus fails to pass through the nonlinear optical crystal 24' or to fall onto the optical lens 22'. This leads to lower conversion efficiency and oscillation efficiency.

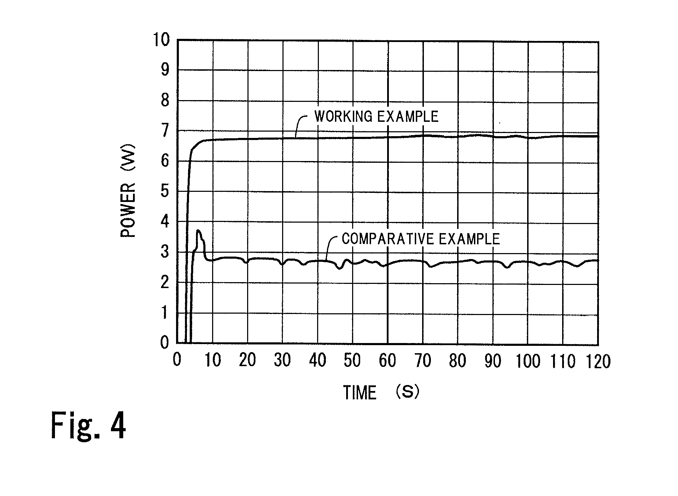

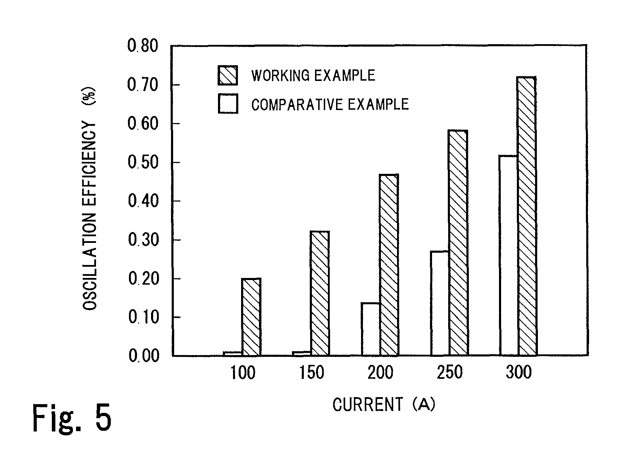

Figs. 4 and 5 depict a time/laser power characteristic and an excitation current/oscillation efficiency characteristic shown by the laser processing apparatus of this embodiment that are each compared with a comparative example. The comparative example is given by removing the 1/4 wavelength plate 16 from the optical resonator and, as in the conventional case (Fig. 3), determining the focus f of the optical lens 22 to be near the counter face of the nonlinear optical crystal 24 in the laser oscillator 10 of Fig. 1.

Fig. 4 depicts the laser power characteristic of the second higher harmonic wave laser beam SHG that results in a test of setting the value of an excitation current supplied from the laser power supply unit 28 to the electro-optical excitation unit 26 to 300 A and generating a long pulse of 1 msec in pulse width and 8 pps in repetitive frequency by repetitive oscillation. As shown in Fig. 4, the comparative example demonstrates that the laser power climbs up to a level close to 4 W at the start of oscillation but immediately drops below 3 W. In contrast, the working or embodiment example demonstrates that the laser power climbs up to a level close to 7 W at the start of oscillation to remain stable at the same level afterward. The working example, therefore, achieves the laser output power two times or more the laser output power achieved in the comparative example.

Fig. 5 is a bar graph of an excitation current/oscillation efficiency characteristic that results in a test of generating a long pulse of 1 msec in pulse width by single oscillation. In the graph, excitation current represented by the horizontal axis may be replaced with input power. As shown in Fig. 5, the working example also greatly exceeds the comparative example in achieving higher oscillation efficiency in the entire range of input power, demonstrating a substantial improvement in oscillation efficiency especially in a range of low input power. This improvement offers a great advantage in precision processing applications.

While the preferred embodiment of the present invention has been described heretofore, the above embodiment is not intended to limit the present invention. Those skilled in the art may modify or revise the embodiment in a specific mode in various ways without deviating from the technical idea and technical scope of the present invention.

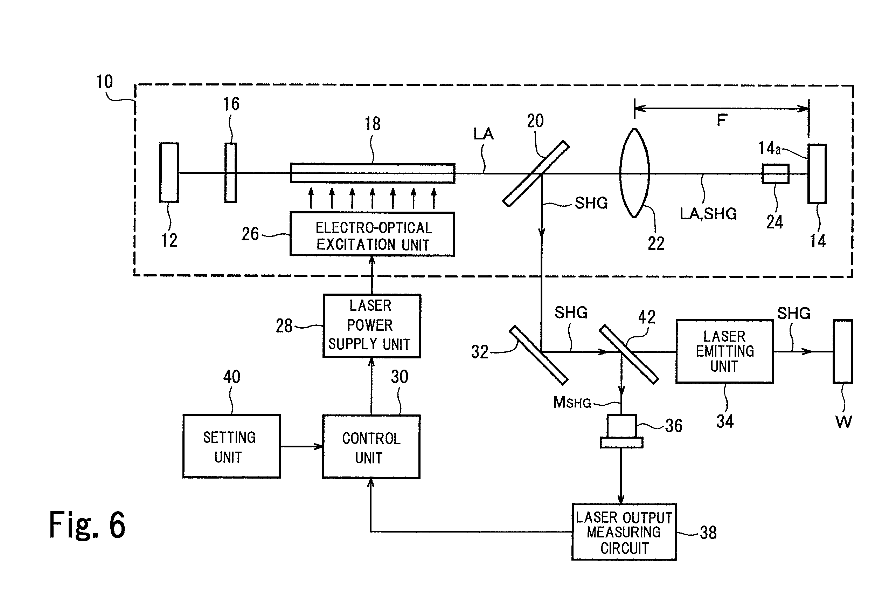

For example, while the above optical resonator has a linear configuration in which three mirrors 12, 20, and 14 and other optical components are arranged on a straight line, the optical resonator may be modified to have a triangular configuration in which three mirrors 12, 20, and 14 are arranged at the vertexes of a triangle, respectively, or a reflecting configuration.
In another embodiment as shown in Fig.6, the photosensor 36 that is provided for the sake of laser power feedback control receives a light M_{SHG} reflected by a beam splitter 42 disposed on the light path between the bent mirror 32 and the laser emitting unit 34. The beam splitter 42 that is coated with a film antireflective to the second harmonic wavelength reflects a portion (for example, 5 percent) of the beam SHG toward the photosensor 36 while the remaining portion of the beam SHG is transmitted straight through the beam splitter 42.

In the above embodiment, the higher harmonic wave laser beam output from the laser oscillator is the green laser beam of the second higher harmonic wave. The present invention, however, may also apply to, for example, a laser oscillator that outputs a laser beam having a frequency equal to or higher than the frequency of a third higher harmonic wave (with wavelength of 266 nm), instead of outputting the second higher harmonic wave green laser beam.

The laser processing apparatus of the present invention aplies not only to laser welding but also to other laser processing of laser marking, holing, cutting, etc.

## Claims

1. A laser oscillator comprising:
an optical resonator having first and second terminating mirrors optically arranged opposite to each other,
an active medium disposed on a light path of the optical resonator;
an excitation unit that pumps the active medium to generate a fundamental wave laser beam having a fundamental frequency;
a nonlinear optical crystal cut for type II phase matching, the nonlinear optical crystal being disposed closer to the first terminating mirror on the light path of the optical resonator to generate a higher harmonic wave laser beam having a frequency N times (N denotes an integer equal to or more than 2) a frequency of the fundamental wave beam;
an optical lens that is disposed to be separated from the first terminating mirror by a distant approximately equal to a focal distance across the nonlinear optical crystal on the light path of the optical resonator so that a focus of the optical lens is located near a reflection surface of the first terminating mirror,
a 1/4 wavelength plate disposed between the active medium and the second terminating mirror on the light path of the optical resonator; and
a higher harmonic wave separating/outputting mirror that is disposed on the light path of the optical resonator to extract the higher harmonic wave laser beam out of the optical resonator.

2. The laser oscillator of claim 1, wherein
the optical lens condenses the fundamental wave laser beam propagated from the active medium side virtually as parallel light and causes the condensing fundamental wave laser beam to pass through the nonlinear optical crystal to focus on the focus, and then collimates the fundamental wave laser beam reflected by the first terminating mirror as radiantly spreading light and propagating through the nonlinear optical crystal to the optical lens, into parallel light.

3. The laser oscillator of claim 1 or 2, wherein
the higher harmonic wave separating/outputting mirror is disposed between the active medium and the optical lens in such a way that the higher harmonic wave separating/outputting mirror tilts at a given angle against a light path of the optical resonator.

4. The laser oscillator of any one of claims 1 to 3, wherein
a focus of the optical lens is at a position separated from a reflection surface of the first terminating mirror toward the optical lens by a distance of 5 mm or less.

5. The laser oscillator of claim 4, wherein
a focus of the optical lens is at a position separated from a reflection surface of the first terminating mirror toward the optical lens by a distance of about 2 mm.

6. A laser processing apparatus comprising:
the laser oscillator of any one of claims 1 to 5; and
a laser emitting unit that condenses and emits the higher harmonic wave laser beam extracted from the higher harmonic wave separating/outputting mirror of the laser oscillator, onto a workpiece.

7. The laser processing apparatus of claim 6, comprising:
a reflecting mirror that bends a light path of the higher harmonic wave laser beam extracted from the higher harmonic wave separating/outputting mirror at a given reflection angle;
an optical fiber that transmits the higher harmonic wave laser beam from the reflecting mirror to the laser emitting unit;
an incident unit disposed between the reflecting mirror and the optical fiber, the incident unit focusing and irradiating the higher harmonic wave laser beam from the reflecting mirror onto an incident facet of the optical fiber; and
a reflection angle adjusting mechanism that adjusts a direction of reflection of the higher harmonic wave laser beam at the reflecting mirror.

8. The laser processing apparatus of claim 6 or 7, wherein
the excitation unit includes:
an excitation light generating unit that generates excitation light for optically pumping the active medium;
a laser power supply unit that supplies power for generating the excitation light to the excitation light generating unit; and
a control unit that controls power supplied from the laser power supply unit to the excitation light generating unit.

9. The laser processing apparatus of claim 8, wherein
the laser power supply unit includes:
a dc power supply unit that outputs dc power; and
a switching element connected between the dc power supply unit and the excitation light generating unit, and wherein
the laser power supply unit causes the switching element to switch on and off at a high frequency during a given pulse period to supply power in a pulse waveform to the excitation light generating unit.

10. The laser processing apparatus of claim 9, comprising:
a higher harmonic wave laser output measuring unit that measures a laser output of the higher harmonic wave laser beam; and
a control unit that controls switching of the switching element to match a laser output measurement given by the higher harmonic wave laser output measuring unit to a given reference value or a reference waveform.
